# EUROPEAN PATENT SPECIFICATION

(11) **EP 2 497 871 B1**
(45) Date of publication and mention of the grant of the patent: **02.01.2019**
(21) Application number: 10828112.2
(22) Date of filing: 05.11.2010
(51) Int. Cl.: F16L 5/04, F16L 59/12, B32B 1/08, B32B 3/06, B32B 3/08, B32B 3/26, B32B 5/02, B32B 5/18, B32B 5/24, B32B 9/00, B32B 9/04, B32B 15/04, B32B 15/08, B32B 15/092, B32B 15/14, B32B 27/06, B32B 27/20, B32B 27/30, B32B 27/32, H02G 3/04

(54) **FIRE PROTECTION COMPARTMENT PASS-THROUGH SECTION STRUCTURE**
STRUKTUR FÜR EINEN DURCHGANGSABSCHNITT EINER BRANDSCHUTZKAMMER
STRUCTURE DE SECTION TRAVERSANTE DE COMPARTIMENT DE PROTECTION CONTRE L'INCENDIE

(30) Priority: 06.11.2009 JP 2009254948
(43) Date of publication of application: 12.09.2012
(73) Proprietor: Sekisui Chemical Co., Ltd., Osaka 530-8565 (JP)
(72) Inventor: TANAKA, Takanari, Hasuda-shi Saitama 349-0198 (JP); OKADA, Kazuhiro, Hasuda-shi Saitama 349-0198 (JP)
(74) Representative: Ter Meer Steinmeister & Partner
(86) International application number: PCT/JP2010/006528
(87) International publication number: WO 2011/055551

(56) References cited:
- DE-A1- 3 147 042
- JP-A- 2001 303 692
- JP-A- 2002 167 885
- JP-A- 2004 232 452
- JP-A- 2008 184 896
- JP-U- H0 595 133

## Description

### TECHNICAL FIELD

The present invention relates to a structure for a pass-through section in a fire protection compartment provided in a partition section of the structure for architecture, marine vessels or the like.

### BACKGROUND ART

A partition section of the structure for architecture or the like usually includes some compartments so that flame and smoke do not spread to the other side of the partition section, even if a fire breaks out at one side of the partition section of the structure for architecture or the like.

When a pipe or the like is installed in the structure, a pass-through hole is formed through the compartment, the pipe or the like needs to be inserted in the pass-through hole. However, if the pipe or the like is merely inserted in the pass-through hole, there is an issue that flame and smoke diffuses from one side of the compartment to the other side by transferring through the pass-through hole at the time of fire occurrence.

A variety of structure has been proposed to address this issue. To protect the flame and smoke from diffusing through the pass-through hole, a structure is proposed that a sheath tube, called as a sleeve, is disposed in the pass-through hole provided in the compartment, the pipe or the like is inserted in the sleeve, and that a thermally expandable fire-resistant sheet is adhered to inside of the sleeve so that the sheet is spaced from the pipe or the like (patent literature 1).

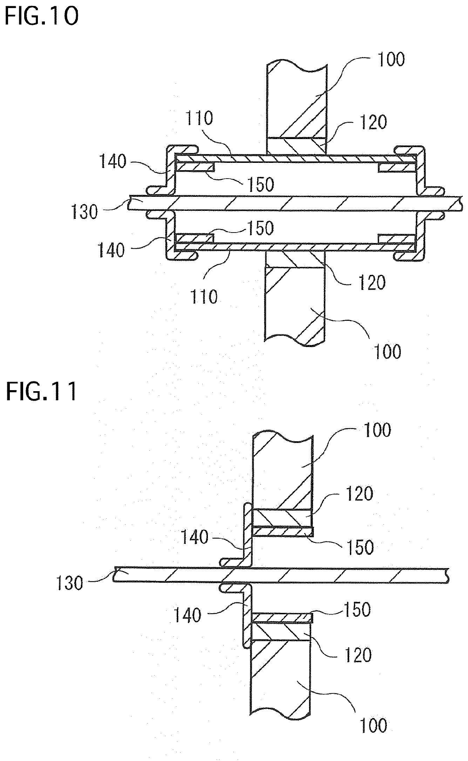

FIG. 10 is a schematic cross-sectional view illustrating the conventional structure for a pass-through section in a fire protection compartment.

A sleeve 110 is installed in a pass-through hole formed in a compartment 100 provided in a partition section of the structure for architecture. The gap between the pass-through hole and the sleeve 110 is filled with noncombustible fixing material 120 including mortar or the like. Further, a pipe or the like 130 is inserted in the sleeve 110.

Because both sides of the sleeve 100 are covered with a seal member 140, even if a fire occurs near the structure for the pass-through section in the fire protection compartment shown in FIG. 10, smoke or the like cannot spread from one side of the compartment to the other side by passing through the sleeve 110.

Also, because a thermally expandable fire-resistant sheet 150 is adhered to inside of the sleeve 110, and the sheet is spaced from the pipe or the like, when the structure for the pass-through section in the fire protection compartment shown in FIG. 10 is exposed heat from the fire or the like, the thermally expandable fire-resistant sheet 150 expands to seal inside the sleeve 110. Therefore, flame from the fire or the like cannot spread from one side of the compartment to the other side by passing through the sleeve 110.

The conventional structure for the pass-through section in the fire protection compartment includes the sleeve 110, so the pipe or the like 130 inserted in the sleeve 110 can be easily added, replaced, and removed. Additionally, if the conventional structure for a pass-through section in a fire protection compartment is exposed to heat from a fire, the thermally expandable fire-resistant sheet 150 adhered inside the sleeve is heated relatively uniformly via the sleeve 110, thereby the thermally expandable fire-resistant sheet 150 expands to seal the space inside the sleeve 110 as designed. Thus, in the conventional structure for the pass-through section in the fire protection compartment, the presence of the sleeve has an important meaning.

### PRIOR ART DOCUMENTS

### Patent Literatures

Patent Literature 1: Japanese Patent Laid-Open Publication No. 2006-29023

JP 2004232452 (A) provides a fireproof compartment perforated part structure comprising a partition wall being a partition section for separating fireproof compartments of a building from each other, a through hole formed in the partition wall, a penetrating object like a pipe, penetrating the through hole, a tape-shaped expansion object made of a thermal expansion material wound around the outer periphery of the pipe, and fillers for sealing gaps between the outer periphery of the tape-shaped expansion object and the through hole.

JP 2002167885 (A) provides a construction method, in which a resin piping, cable, or heat insulating sheath pipe is inserted into a penetration section of a fire compartment, so that the piping, cable, or pipe penetrates through the fire compartment provided on the partition for a building, wherein a tape-shaped molded body is wrapped around and fixed on the part for the penetration section for the resin piping, cable, or heat insulating sheath pipe, the molded body made of a thermal expansion material having the expansion ratio of 3 to 40 times that of normal state subjected to the heat with irradiation value of 50 kw/m2.

DE 3147042 (A1) provides a bushing which employs thermal-physical or/and thermal-chemical means, wherein the multi-layer elements of flexible soft material making a seal between the wall and a process pipe consist of layers, which react in part thermally, in part physically and in part chemically, in the form of films of plastics, ceramic fibre fabrics, metal foils and metal fabrics and/or substances of the nature of resins or foams, which are interposed and at an upper limit temperature react at least partially and remove heat from the surroundings, wherein radioactive substances, chemically toxic substances and flue gases are retained by filter materials which are accommodated in cavities.

### SUMMARY OF INVENTION

### PROBLEMS TO BE SOLVED BY THE INVENTION

However, it may be desired that the sleeve is not installed in some structure for architecture due to workability and economic efficiency.

FIG. 11 is a schematic cross-sectional view illustrating the conventional structure for a pass-through section in a fire protection compartment shown in FIG. 10 without having a sleeve. In the structure for the pass-through section in the fire protection compartment shown in FIG. 11, any sleeve is not used. In the case of previous FIG. 10, the thermally expandable fire-resistant sheet is adhered to inside of the sleeve, while in the case of FIG. 11, a thermally expandable fire-resistant sheet 150 is adhered to inside of the pass-through section by using noncombustible fixing material 120.

In the structure for the pass-through section in the fire protection compartment shown in FIG. 11, if the structure is exposed to heat from a fire or the like, it is expected that the thermally expandable fire-resistant sheet 150 expands to seal the gap between the pass-through hole and the pipe or the like 130, which is similar to the structure for the pass-through section in the fire protection compartment having a sleeve as illustrated by FIG. 10.

However, inventors of the present invention carried out an investigation to find that when the structure for the pass-through section in the fire protection compartment without having a sleeve shown in FIG. 11 is exposed to heat from fire or the like, the thermally expandable fire-resistant sheet 150 expands but it does not adhere to pipe or the like 130 tightly, and then the expansion residues glows and cannot seal around the pipe or the like adequately, thereby a gap can form between the expansion residues and the pipe or the like.

If the expansion residues does not seal around pipe or the like 130 adequately, and a gap forms between the expansion residues and the pipe or the like 130, then smoke and toxic gases can diffuse from one side of the compartment where a fire occurs to the other side, or fire can spread.

It is an object of the present invention to provide a structure for a pass-through section in a fire protection compartment, the structure possessing superior sealing characteristics and superior fire resistance properties between expansion residues of the thermally expandable fire-resistant sheet subsequent to exposure to heat from a fire or the like and pipe or the like therein, even in cases wherein a sleeve is not used.

### MEANS FOR SOLVING THE PROBLEMS

Inventors of the present invention carried out an extensive investigation to solve the issue, among the structure for the pass-through section in the fire protection compartment, the inventors find that the structure for the pass-through section in the fire protection compartment used a thermally expandable fire-resistant sheet consisting of a metal foil layer, a thermally expandable resin layer, and an inorganic fiber layer from the side of the heat insulating material meets an object of the present invention, and as a result, this invention could be accomplished.

Accordingly, the present invention provides:
a structure for a pass-through section in a fire protection compartment according to claim 1.

Additionally, the present invention provides:
a method for controlling an expansion of a thermally expandable fire-resistant sheet according to claim 4.

### EFFECT OF THE INVENTION

Because the structure for the pass-through section in the fire protection compartment of the present invention uses a thermally expandable fire-resistant sheet which consists of the following layers in the following order from the side of the heat insulating material:
a metal foil layer, one or more thermally expandable resin layers, and an inorganic fiber layer preferably laminated with a metal foil,
if the structure for the pass-through section in the fire protection compartment is heated from one side of the compartment, then the thermally expandable resin layer expands from one side of the compartment heated to the other side while enfolding the metal foil layer inside due to tensile force of the outermost surface of the metal foil layer. In the case, the thermally expandable resin layer not only expands toward the center of the pass-through hole, but also expands in a direction perpendicular to the compartment. Accordingly, compared to the conventional structure for a pass-through section in a fire protection compartment which only expands toward the center of the pass-through hole of the compartment, provided is a structure for a pass-through section in a fire protection compartment, the structure possessing superior sealing characteristics and superior fire resistance properties between expansion residues of the thermally expandable fire-resistant sheet subsequent to exposure to heat from a fire or the like and a pipe or the like therein.

When the thickness of the metal foil layer used in the present invention is in a range from 7 to 30µm, the structure for a pass-through section in the fire protection compartment is exposed to heat from one side of the compartment, the thermally expandable resin layer expands from one side of the compartment heated to the other side while enfolding the metal foil layer inside smoothly. Therefore, provided is a structure for a pass-through section in a fire protection compartment, the structure possessing superior sealing characteristics and superior fire resistance properties between expansion residues of the thermally expandable fire-resistant sheet subsequent to exposure to heat from a fire or the like and a pipe or the like therein.

The structure for the pass-through section in the fire protection compartment of the present invention can protect smoke and toxic gases generating at one side of the compartment from spreading from the one side to the other side, because the pass-through hole is covered with the seal member which is installed so as to contact with around the heat insulating material and the end face of the thermally expandable fire-resistant sheet.

An expansion of a thermally expandable fire-resistant sheet can be controlled by using a thermally expandable fire-resistant sheet comprises at least the metal foil layer, a thermally expandable resin layer, and an inorganic fiber layer from the side of the heat insulating material to a structure for a pass-through section in a fire protection compartment, if the structure for the pass-through section in the fire protection compartment is heated from one side of the compartment, then the thermally expandable resin layer expands from one side of the compartment heated to the other side while enfolding the metal foil layer inside.

### BRIEF DESCRIPTION OF THE DRAWINGS

FIG. 1 is a schematic cross-sectional view illustrating the structure for the pass-through section in the fire protection compartment of Example 1 according to the present invention;
FIG. 2 is a schematic cross-sectional view illustrating the thermally expandable fire-resistant sheet used in Example 1 according to the present invention;
FIG. 3 is a schematic cross-sectional view illustrating the fire resistance test with the structure for the pass-through section in the fire protection compartment of Example 1 according to the present invention;
FIG. 4 is a schematic cross-sectional view illustrating the fire resistance test with the structure for the pass-through section in the fire protection compartment of Example 1 according to the present invention;
FIG. 5 is a schematic cross-sectional view illustrating the fire resistance test with the structure for the pass-through section in the fire protection compartment of Example 1 according to the present invention;
FIG. 6 is a schematic cross-sectional view illustrating the structure for the pass-through section in the fire protection compartment of Example 2;
FIG. 7 is a schematic cross-sectional view illustrating the structure for the pass-through section in the fire protection compartment of Example 3;
FIG. 8 is a schematic cross-sectional view illustrating the structure for the pass-through section in the fire protection compartment of Example 4;
FIG. 9 is a schematic cross-sectional view illustrating expansion residues observed from non-heated side of the cavity wall in the fire resistance test of Comparative Example 1;
FIG. 10 is a schematic cross-sectional view illustrating the conventional structure for a pass-through section in a fire protection compartment; and
FIG. 11 is a schematic cross-sectional view illustrating the conventional structure for a pass-through section in a fire protection compartment.

### MODE(S) FOR CARRYING OUT THE INVENTION

While the present invention relates to a structure for a pass-through section in a fire protection compartment, firstly described is a pipe or the like used the present invention. The pipe or the like is inserted the pass-through hole of the compartment provided in a partition section of the structure for architecture, marine vessels or the like.

Example of the pipe or the like include pipes for transporting liquids, such as a refrigerant pipe, a pipe for heat medium, a water pipe, a sewage pipe, a pipe for injecting or draining water, a fuel transfer pipe, a hydraulic piping; pipes for transporting gases, such as a gas pipe, a pipe for transporting heating or cooling medium, a vent pipe; cables, such as an electric wire and cable, an optical-fiber cable, a cable for marine vessels.

Among them, in terms of workability, pipes for transporting liquids is preferable, including a refrigerant pipe, a water pipe, a sewage pipe, a pipe for injecting or draining water, a fuel transfer pipe, hydraulic piping, more preferably a refrigerant pipe.

The pipe or the like can be used one of the pipes for transporting liquids, pipes for transporting gases, cables, or two or more thereof.

The shape of the pipe or the like is not particularly limited, and examples of the pipe or the like include those having a cross-sectional shape of polygonal, such as triangular, quadrangular; those having a cross-sectional shape with two different sides, such as rectangle; those having a cross-sectional shape with two different interior angles, such as parallelogram; those having a cross-sectional shape of oval, round shape, wherein the cross-sectional shape is in a perpendicular to the longitudinal direction of the pipe or the like. Among them, those having a cross-sectional shape of round shape or quadrangular is preferable because they have an improved workability.

The cross-sectional size of the pipe or the like is usually in a range from 1 to 1000 mm, preferably in a range from 5 to 750 mm based on the longest length between the center of gravity of the cross-sectional shape and the outer line of the cross-sectional shape. When the pipe or the like is pipes for transporting liquids, pipes for transporting gases, cables or the like, the size is usually in a range from 0.5 mm to 10 cm, preferably in a range from 1 mm to 5 cm.

While the material for the pipe or the like is not particularly limited, and examples thereof include one of metallic material, inorganic material, organic material, and two or more combinations thereof.

Examples of the metallic material include iron, steel, stainless steel, copper, and the alloy of two or more thereof.

In addition, examples of inorganic material include glass, ceramics. Examples of organic material include synthetic resins, such as vinyl chloride resin, ABS resin, vinylidene fluoride resin, polyethylene resin, polypropylene resin.

One, two or more these materials can be used.

While the pipe or the like used in the present invention is at least one of metallic material pipes, inorganic material pipes, and organic material pipes, it can be used as a laminated pipe using two or more of metallic material pipes, inorganic material pipes, and organic material pipes as inner pipe or outer pipe. In terms of handling, the pipe or the like is preferably metallic material pipes, organic material pipes, or the like. More preferably, the pipe or the like is metallic material pipes, such as steel pipes, copper pipes.

The pipe or the like used in the present invention is inserted in the pass-through hole of the compartment provided the partition section of the structure. Examples of the compartment include a wall of structure for architecture, a partition, a floor, a ceiling, a steel plate disposed in waterproof compartment for marine vessels or cabins.

The pipe or the like can be inserted in the pass-through hole by providing the pass-through hole in the compartment.

Next, described in a thermally expandable fire-resistant sheet used in the present invention.

The thermally expandable fire-resistant sheet used in the present invention consists of the following layers in the following order from the side of the heat insulating material: a metal foil layer, one or more thermally expandable resin layers, and an inorganic fiber layer preferably laminated with a metal foil.

Example of the metal foil used in the metal foil layer include aluminum foil, copper foil, stainless steel foil, tin foil, lead foil, tin-lead alloy foil, clad foil, lead antifoil. In terms of workability, the metal foil is preferably aluminum foil, copper foil or the like.

The thickness of the metal foil layer is preferably in a range from 7 to 30µm, more preferably in range from 7 to 20µm. When the thickness of the metal foil layer is less than 7µm, the tensile force of the metal foil is unsatisfactory, while when the thickness of the metal foil layer is over 30µm, the layer has a poor flexibility. In these cases, if one compartment of the structure for the pass-through section in the fire protection compartment of the present invention is exposed to heat from a fire, then the thermally expandable fire-resistant sheet can be avoided expanding from one side of the compartment heated to the other side while enfolding the metal foil layer inside smoothly.

Examples of the thermally expandable resin composition used in the thermally expandable resin layer include an epoxy resin containing the thermally expandable resin composition containing an epoxy resin as a resin component, and a phosphorus compound, a thermally expandable layered inorganic, and an inorganic filler.

The resin component is not particularly limited, and examples thereof include resins resulted from the reaction of a monomer having an epoxy group and a curing agent.

Examples of the monomer having an epoxy group include, as two functional glycidyl ether based monomer, polyethylene glycol based monomer, polypropyleneglycol based monomer, neopentylglycol based monomer, 1,6-hexanediol based monomer, trimethylolpropane based monomer, propyleneoxide-bisphenol A, hydrogenerated bisphenol A based monomer, bisphenol A based monomer, bisphenol F based monomer.

Also, examples of glycidyl ester based monomer include hexahydrophthalic anhydride based monomer, tetrahydro phthalic anhydride based monomer, dimer acid based monomer, p-oxyoxybenzoic acid based monomer.

Examples of the multifunctional glycidyl ether based monomer include phenol-novolac based monomer, orthocresol based monomer, DPP-novolac based monomer, dicyclopentadienes, phenol based monomer.

One, two or more of these monomers can be used.

Further, examples of the curing agent include curing agents for polyaddition, curing agents for catalysis. Examples of the polyaddition typecuring agent include polyamines, acid anhydrides, polyphenols, polymercaptans.

Examples of the curing agent for catalysis include tertiary amines, imidazoles, Lewis acid complexes. A method for curing these epoxy resins is not particularly limited, and can be performed according to any known methods in the art.

Blends of above two or more resin components can be used to adjust melting viscosity, flexibility, and adherence property of the resin components.

The phosphorus compound is not particularly limited, and examples thereof include red phosphorus; various phosphate esters, such as triphenylphosphate, tricresyl phosphate, trixylenyl phosphate, cresyldiphenylphosphate, xylenyldiphenylphosphate; metallic phosphates, such as sodium phosphate, potassium phosphate, magnesium phosphate; ammonium polyphosphates; compounds represented by chemical formula 1.

One, two or more of these phosphorus compounds can be used.

Among them, in terms of fire resistance properties, red phosphorus, compounds represented by the following chemical formula, ammonium polyphosphates are preferred, in terms of performance, safety, cost, ammonium polyphosphates are more preferred. 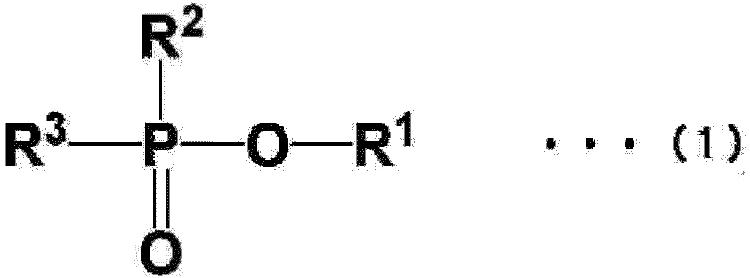 wherein, R¹ and R³ represent a hydrogen, a linear or branched alkyl group having 1 to 16 carbon atoms, or an aryl group having 6 to 16 carbon atoms.

R² represents a hydroxyl group, a linear or branched alkyl group having 1 to 16 carbon atoms, a linear or branched alkoxyl group having 1 to 16 carbon atoms, an aryl group having 6 to 16 carbon atoms, or aryloxy group having 6 to 16 carbon atoms.

The compounds represented by the chemical formula includes methylphosphonic acid, dimethyl methylphosphonate, diethyl methylphosphonate, ethylphosphonic acid, propylphosphonic acid, butylphosphonic acid, 2-methylpropylphosphonic acid, t-butylphosphonic acid, 2,3-dimethyl-butylphosphonic acid, octylphosphonic acid, phenylphosphonic acid, dioctylphenyl phosphonate, dimethylphosphinic acid, methylethylphosphinic acid, methylpropylphosphinic acid, diethyl phosphinic acid, dioctylphosphinic acid, phenylphosphinic acid, diethyl phenylphosphinic acid, diphenylphosphinic acid, bis(4-methoxyphenyl)phosphinic acid.

Among them, t-butylphosphonic acid, which is expensive, is preferable in terms of high fire resistance.

Ammonium polyphosphates are not particularly limited, and examples thereof include ammonium polyphosphate, melamine modified ammonium polyphosphate or the like. In terms of fire resistance, safety, cost, handling property, ammonium polyphosphate is suitably used.

Commercially available products include trade name EXOLIT AP422 and EXOLIT AP462 manufactured by Clariant.

The phosphorus compound appears to react with a metallic carbonate such as calcium carbonate, zinc carbonate to promote the expansion of the metallic carbonate. In particular, when ammonium polyphosphate is used as the phosphorus compound, it offers great expansion effect. Additionally, it acts as efficient aggregate, after burning, it forms a residue having high shape retention.

Next, among each components in the thermally expandable resin composition, described is a thermally expandable layered inorganic. The thermally expandable layered inorganic expands during heating, such the thermally expandable layered inorganic is not particularly limited, and examples thereof include vermiculite, kaolin, mica, the thermally expandable graphite.

The thermally expandable graphite is conventionally known materials in the art. The thermally expandable graphite is produced by treating powdery graphite such as natural flake graphite, pyrolytic graphite, kish graphite with inorganic acid such as concentrated sulfuric acid, nitric acid, selenic acid and strong oxidizing agent such as concentrated nitric acid, perchloric acid, hyperchloride, permanganate, dichromate, hydrogen peroxide to form a graphite intercalation compound, which is one of crystalline compounds having layered structure of carbon.

The thermally expandable graphite obtained by treating with acids as described above is preferably used by further neutralizing with ammonia, aliphatic lower amine, alkali metal compounds, alkaline earth metal compounds.

Examples of the aliphatic lower amine include monomethylamine, dimethylamine, trimethylamine, ethylamine, propylamine, butylamine.

Examples of the alkali metal compound and the alkaline earth metal compound include hydroxides, oxides, carbonates, sulfates, organic acid salts of potassium, sodium, calcium, barium, magnesium and the like.

The particle size of the thermally expandable graphite is preferably in a range from 20 to 200 meshes.

When the particle size is less than 20 meshes, the degree of expansion of the graphite decreases, and the heat insulating layer having an inadequate resistance to fire property can be obtained. On the other hand, when the particle size is more than 200 meshes, there is an advantage that the degree of expansion of the graphite increases, but it has a poor dispersibility during kneading with the thermoplastic resin or epoxy resin, and tends to decrease its properties.

Examples of commercially available neutralized the thermally expandable graphite as described above include GRAFGUARD#160, GRAFGUARD#220 from UCAR Carbon Co., Inc., and GREP-EG from Tosoh corporation.

Next, among of the each components of the thermally expandable resin composition, an inorganic filler is described.

The inorganic filler is not particularly limited, and examples thereof include silica, diatomite, alumina, zinc oxide, titanium oxide, calcium oxide, magnesium oxide, iron oxide, tin oxide, antimony oxide, ferrites, calcium hydroxide, magnesium hydroxide, aluminum hydroxide, basic magnesium carbonate, calcium carbonate, magnesium carbonate, zinc carbonate, barium carbonate, dawsonite, hydrotalcite, calcium sulfate, barium sulfate, satin spar, potassium salts of calcium silicate or the like, talc, clay, mica, montmorillonite, bentonite, activated clay, sepiolite, imogolite, sericite, glass fibers, glass beads, silica balloons, aluminum nitride, boron nitride, silicon nitride, carbon black, graphite, carbon fibers, carbon balloons, charcoal powder, various metal powders, potassium titanate, magnesium sulfate, lead zirconate titanate, aluminum borate, molybdenum sulfide, silicon carbide, stainless steel fibers, zinc borate, various magnetic powders, slag fibers, fly ash, inorganic phosphorus compounds, silica alumina fibers, alumina fibers, silica fibers, zirconia fibers.

One, two or more inorganic fillers can be used.

The inorganic filler acts as a aggregate. The inorganic filler contributes to an improved strength and heat capacity of the expanded heat insulating layer produced after heating.

Therefore, metallic carbonates, which the representative examples are calcium carbonate, zinc carbonate; aqueous inorganics, which the representative examples are aluminum hydroxide and magnesium hydroxide which acts as an aggregate and has endothermic effect after heating is preferred. A mixture of metallic carbonate of alkali metal, alkaline earth metal and metallic carbonate of IIb element in The Periodic Table, or a mixture of these carbonates and the aqueous inorganics is preferred.

When the inorganic filler used in the present invention is particle, the size is preferably in a range from 0.5 to 200µm, more preferably in a range from 1 to 50µm.

When the added amount of the inorganic filler is lower, the filler has preferably smaller particle size because the dispersibility of the filler has a great influence on its properties. However, when the particle size of the inorganic filler is less than 0.5µm, the filler may form the secondary aggregates, and degrade the dispersibility.

Additionally, when the added amount of the inorganic filler is high, the viscosity of the resin composition increases, and thus the moldability of the composition decreases as the filling thereof proceeds. Because the viscosity of the resin composition can decrease by increasing its particle size, larger one within these range is preferred.

Moreover, when the particle size is over 200µm, surface property of the molded products and mechanical properties of the resin composition may be degraded.

Among the inorganic filler, in particular, metallic carbonates such as calcium carbonate, zinc carbonate which acts as an aggregate; aqueous inorganic such as aluminum hydroxide and magnesium hydroxide which has endothermic effect during heating and acts as an aggregate is preferred.

The combination of the aqueous inorganic and the metallic carbonates appears to highly contribute to an improved strength and heat capacity of the burned residue.

Among the inorganic filler, the aqueous inorganic such as aluminum hydroxide, magnesium hydroxide is particularly preferred in that endothermic reaction occurs by water generated from dehydration reaction during heating, and thus rise in temperature decreases to improve heat resistance, and that the strength of the combustion residue improves by remaining oxides as combustion residue to act as a aggregate.

Further, magnesium hydroxide and aluminum hydroxide exert dehydration effect at different range of temperature, so the range of temperature exerting dehydration effect broadens by using a combination of magnesium hydroxide and aluminum hydroxide. Additionally, the combination offers more efficient in limiting the rise in temperature. Therefore, the combination is preferred.

When the particle size of the aqueous inorganic decreases, it becomes too bulky to fill highly. Therefore, preferred is the aqueous inorganic having larger particle size to fill highly for improving dehydration effect. Specifically, it is known that using the aqueous inorganic having a particle size of 18µm, limit of filling is about one and a half time over that of 1. 5µm. Additionally, the particle can fill highly by combinating larger particle and smaller particle.

Commercially available products of aqueous inorganic include aluminum hydroxide sold under trade name HIGILITETM H-42M having a particle size of 1µm (manufactured by Showa Denko K.K.), and trade name HIGILITETM H-31 having a particle size of 18µm (manufactured by Showa Denko K.K.).

Commercially available products of the calcium carbonate include that sold under trade name WHITON SB Red having a particle size of 1.8µm (manufactured by SHIRAISHI CALCIUM KAISHA, LTD.), and trade name BF300 having a particle size of 8µm (manufactured by Bihoku Funka Kogyo Co.,Ltd.).

As mentioned in the beginning, examples of the thermally expandable fire-resistant material used in the present invention include those containing the resin component, such as epoxy resin as described above, the thermally expandable layered inorganic, and the inorganic filler. Now their formulation will be described.

The resin composition preferably contains 20 to 350 weight parts of the thermally expandable layered inorganic, 50 to 400 weight parts of the inorganic filler based on 100 weight parts of the resin components of the epoxy resin. Further, the sum of the thermally expandable layered inorganic and the inorganic filler is preferably in a range from 200 to 600 weight parts.

By heating, the resin composition expands to form the fire-resistant insulating fire layer. According to the formulation, the thermally expandable fire-resistant material can expand subsequent to exposure to heat from a fire or the like to accomplish necessary volume expansion. After expansion, the material can form residues having a determined heat insulating property and strength, resulting in a stable fireproof performance.

When the amount of the layered inorganic is less than 20 weight parts, the expansion ratio is too small to provide a sufficient fire resistance properties and fire preventing properties. On the other hand, when the amount of the layered inorganic is over 350 weight parts, cohesive force is too small to provide a good strength as a molded article. When the amount of the inorganic filler is less than 50 weight parts, the remaining volume the filler after combustion can decrease, and then insufficient heat insulating fire layer can occur. Additionally, as the ratio of combustible material increases, flame resistance may decrease.

On the other hand, if the amount of the inorganic filler is over 400 weight parts, the ratio of resin component formulated decreases, and cohesive force is too small to provide a good strength as a molded article.

When the sum of the thermally expandable layered inorganic and the inorganic filler in the resin composition is less than 200 weight parts, the amount of the residues after burning is lacking, resulting in insufficient fire resistance properties. On the other hand, when the sum is over 600 weight parts, decrease in mechanical property may be too high to use.

The thermally expandable resin composition used in the present invention may further contain any additive, such as an agents for inhibiting harm of metals, an antistatic agent, a stabilizing agent, a cross-linking agent, a lubricant, a flexibilizer, a pigment, a tackifier resin, and tackifier, such as polybutene, petroleum resin, in addition to an antioxidant such as phenols, amines, sulphurs as necessary.

Next, described is a method for producing a thermally expandable resin composition. The method for producing the thermally expandable resin composition is not particularly limited, and the composition can be obtained by a method which the thermally expandable resin composition is dispersed in organic solvent, or heated and molten to form a coating, a method which the composition is dispersed in solvent to prepare a slurry, a method which the composition is molten under heating.

The thermally expandable resin composition can be obtained by kneading these components using any known apparatus including a single screw extruder, a twin screw extruder, a Bumbary mixer, a kneader mixer, a kneading roll, a Raikai mixer, a planetary gearbox mixer.

Also, filler is kneaded with monomer having an epoxy group, and kneaded with curing agent separately, and then their mixture can knead with static mixer, dynamic mixer immediately before molding.

The thermally expandable resin composition used in the present invention can be obtained by the method as described above.

Described herein is an inorganic fiber layer, which is included in the thermally expandable fire-resistant sheet, used in the present invention.

Examples of an inorganic fiber used in the inorganic fiber layer include glass wool, rock wool, ceramic wool, satin spar, carbon fibers, stainless steel fibers, slag fibers, silica alumina fibers, alumina fibers, silica fibers, zirconia fibers. The inorganic fiber layer is preferably used inorganic fiber cloth using the inorganic fiber.

In addition, the inorganic fiber layer used in the inorganic fiber layer is preferably used by laminating metal foil. More preferred specific examples of the inorganic fiber laminated with metal foil include aluminum foil laminated glass cloth, copper foil laminated glass cloth.

The thermally expandable fire-resistant sheet used in the present invention can be obtained by laminating a metal foil layer, a thermally expandable resin layer, and an inorganic fiber layer or the like. The lamination includes co-extrusion molding, hot press, and the like, and means for sticking each layer with adhesive agent. It is preferred that the metal foil layer is in the outermost surface of the thermally expandable fire-resistant sheet used in the present invention.

Next, a heat insulating material used in the present invention is described.

As the heat insulating material, synthetic resins having air bubbles therein are used including urethane foam, polyethylene foam, polypropylene foam, vinyl chloride foam, polystyrene foam.

The synthetic resins having air bubbles therein is preferred, because the synthetic resins having air bubbles therein is molten or burned down subsequent to exposure to heat from a fire or the like, and do not disturb a expansion of the thermally expandable fire-resistant sheet.

In addition, examples of the seal member used in the present invention include sealant for architecture specified under JIS A5758, epoxy injection sealant for repairing in buildings specified under JIS A6024, jointing materials for gypsum plasterboards specified under JIS A6914, mortar, putty, and caulking. As the seal member 4, in terms of workability, putty and caulking made of rubber such as chloroprene rubber or silicone formulated with filler, fire retardant is preferred.

Next, while several examples of the invention are now described in further detail with reference to Figures, the present invention is not limited in any ways by these examples. Examples

### Example 1

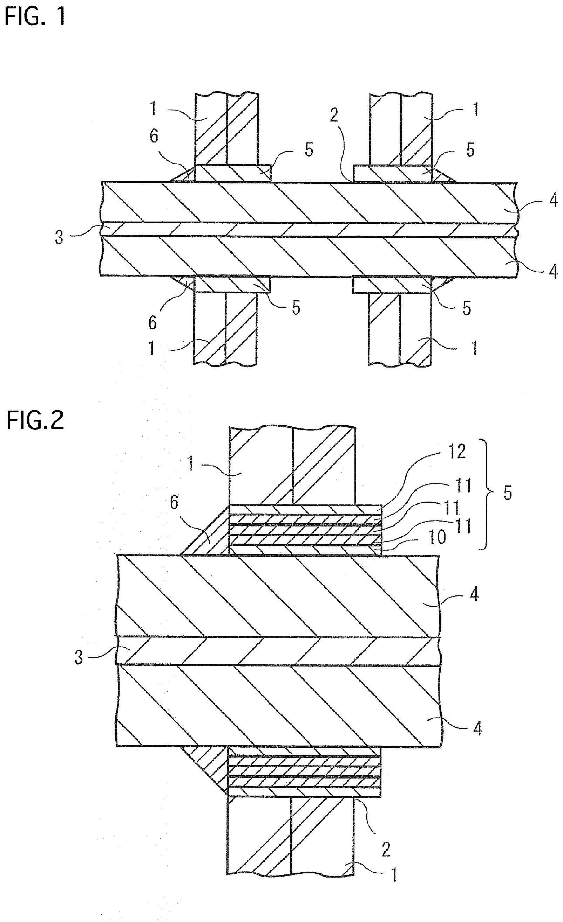

FIG. 1 is a schematic cross-sectional view illustrating the structure for the pass-through section in the fire protection compartment of Example 1 according to the present invention. In Example 1, a cavity wall 1 of the structure is used as a compartment provided in a partition section of the structure.

The cavity wall in FIG. 1 is formed by arranging a pair of spaced two plasterboards.

The cavity wall 1 includes a circular pass-through hole 2, a pipe or the like 3 (copper pipe) is inserted in the pass-through hole 2.

The pipe or the like 3 used in the Example had an outer diameter of 25 mm.

Additionally, urethane foam as a heat insulating material 4 is sealed tightly on the circumference of the pipe or the like 3. The heat insulating material 4 had a thickness of 50mm. The thickness of the heat insulating material used in the present invention is preferably in a range from 25 mm to 65 mm.

Further, a thermally expandable fire-resistant sheet 5 is installed in a gap between the heat insulating material 4 and the pass-through hole so that the heat insulating material 4 is winded by the thermally expandable fire-resistant sheet 5. The width of the thermally expandable fire-resistant sheet 5 is preferably within a range from 100 to 300 percent based on that of the heat insulating material 4 in a perpendicular direction to the surface of the cavity wall 1.

The thermally expandable fire-resistant sheet 5 is installed so that 20mm of the sheet 5 protrudes in the cavity wall 1. The gap between the pipe or the like 3 and the pass-through hole 2 is sealed tightly with the heat insulating material 4 and the thermally expandable fire-resistant sheet 5.

Additionally, a seal member 6 as a noncombustible caulking is located on the circumference of the heat insulating material 4 and the end face of the thermally expandable fire-resistant sheet 5. The seal member 6 is located so as to cover the pass-through hole 2.

FIG. 2 is a schematic cross-sectional view illustrating the thermally expandable fire-resistant sheet used in Example 1 of the present invention.

As shown in FIG. 2, the heat insulating material 4 is winded by the thermally expandable fire-resistant sheet 5, and inserted in the pass-through hole 2 of the cavity wall 1.

The thermally expandable fire-resistant sheet 5 is produced by laminating in order of an aluminum foil 10, an epoxy resin containing the thermally expandable resin composition 11 (available under trade name Fi-BlockTM from Sekisui Chemical Co Ltd.), an aluminum foil laminated glass cloth 12 from the heat insulating material 4.

The aluminum foil 10 has a thickness of 20µm. In this case, the epoxy resin containing the thermally expandable resin composition layer 11 is used by piling three sheets having a thickness of 1mm.

In FIG. 1 and FIG. 2, the pass-through hole 2 formed in the cavity wall 1 is filled tightly with the pipe or the like 3, the heat insulating material 4 and the thermally expandable fire-resistant sheet 5. Therefore, the shape of the pass-through hole 2 along the surface of the cavity wall 1 is homologous of that of the cross-section of the pipe or the like 3, the heat insulating material 4, and the thermally expandable fire-resistant sheet 5 along the surface of the cavity wall 1.

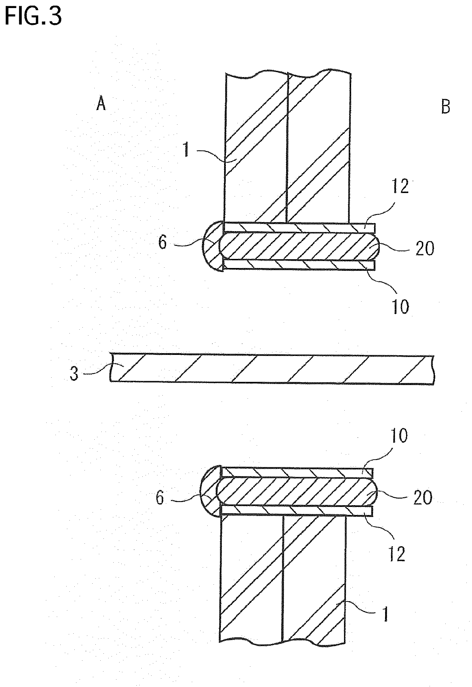

FIGS.3 to 5 are a schematic cross-sectional view for explaining the fire resistance test using the structure for the pass-through section in the fire protection compartment of Example 1 according to the present invention.

The fire resistance test compliant with ISO 834 was carried out from the A side described in FIGS. 3 to 5 (in FIG. 3, from the left side).

Once the fire resistance test started, as exemplified in FIG. 3, as the heat insulating material 4 included in the structure for the pass-through section in the fire protection compartment of the Example 1 is molten and removed, expansion residues 20 of the thermally expandable fire-resistant sheet began to expand.

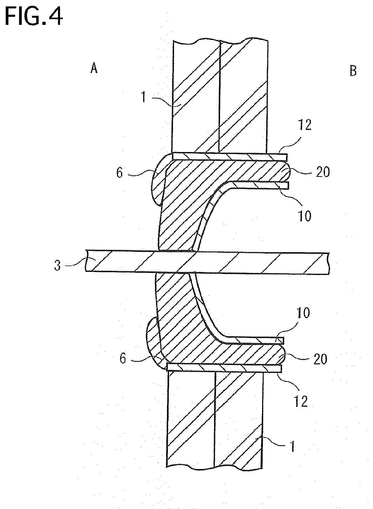

As exemplified in FIG. 4, once the aluminum foil 10 comes in contact with the pipe or the like 3, the aluminum foil intercepts the expanding pressure from the expansion residues 20. Therefore, the expansion residues 20 compresses as it comes in contact with the pipe or the like 3, and adheres to the pipe or the like 3.

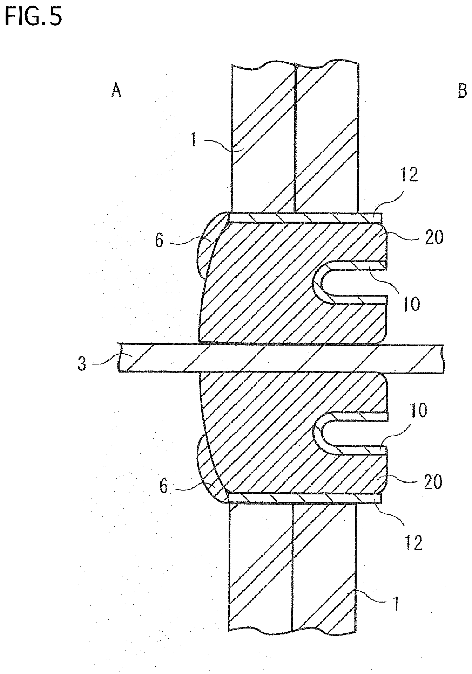

Furthermore, over time, as exemplified in FIG. 5, the expansion residues 20 is being formed from the heated A side of the compartment to the un-heated B side of the compartment by the expanding pressure from the expansion residues 20 so that the aluminum foil 10 is wrapped in.

When observed the structure for the pass-through section in the fire protection compartment from the B side described in FIG. 5, glowing of the expansion residues 20 could not be observed before and after the fire resistance test.

In addition, the temperature of the un-heated side of the heat insulating material 4 increased to 111 °C at 2 hours after starting of the fire resistance test, and the leakage of flame could not observed at the B side of the structure for the pass-through section in the fire protection compartment.

### Example 2

Example 2 is a modification of Example 1.

Example 2 is similar to Example 1, provided that the thermally expandable fire-resistant sheet 50 is used instead of the thermally expandable fire-resistant sheet 5 used in Example 1, which the size of the sheet 50 is different from that of the sheet 5.

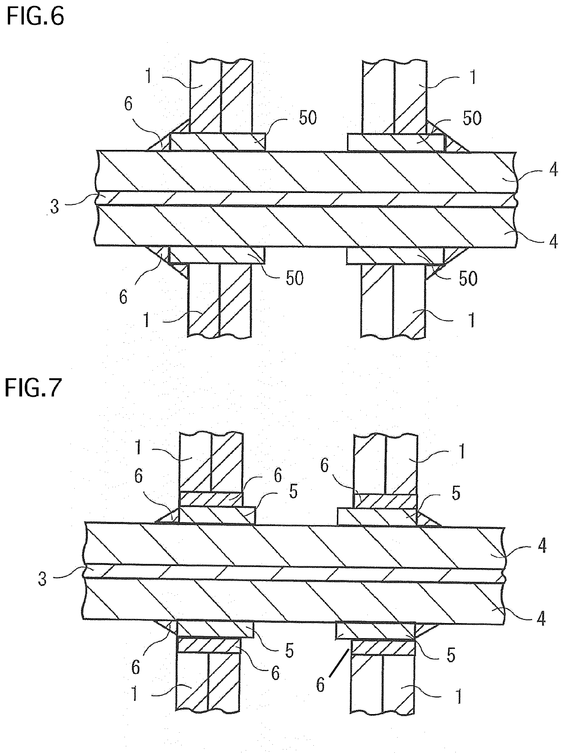

FIG. 6 is a schematic cross-sectional view illustrating the structure for the pass-through section in the fire protection compartment of Example 2.

In Example 1, one end face of the thermally expandable fire-resistant sheet 5 and the outer surface of the cavity wall 1 are arranged in substantially identical plane (see FIG. 1) . Unlike Example 1, in Example 2, the thermally expandable fire-resistant sheet 50 is installed so that 20mm of both end faces of the sheet 5 protrudes from the outer surface of the cavity wall 1.

Also, the seal member 6 as a noncombustible caulking is located on the circumference of the heat insulating material 4, the end face of the thermally expandable fire-resistant sheet 50, and the outer surface of the cavity wall 1. The seal member 6 is located so as to cover the pass-through hole 2.

The fire resistance test compliant with ISO 834 was carried out with the structure for the pass-through section in the fire protection compartment of Example 2. The result was similar to that of Example 1.

### Example 3

Example 3 is a modification of Example 1.

FIG. 7 is a schematic cross-sectional view illustrating the structure for the pass-through section in the fire protection compartment of Example 3.

In Example 1, the heat insulating material 4 is winded by the thermally expandable fire-resistant sheet 5. On the other hand, in Example 3, the size of the pass-through hole 2 formed in the cavity wall 1 is larger than that of Example 1. Therefore, Example 3 is similar to Example 1, provided that a seal member 6 as a noncombustible caulking is filled between the thermally expandable fire-resistant sheet 5 used in Example 1 and the pass-through hole 2.

The fire resistance test compliant with ISO 834 was carried out with the structure for the pass-through section in the fire protection compartment of Example 3. The result was similar to that of Example 1.

### Example 4

Example 4 is a modification of Example 2.

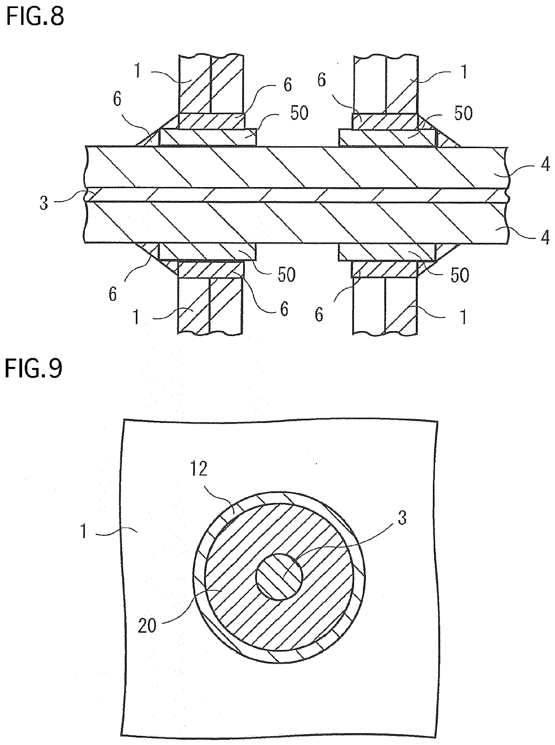

FIG. 8 is a schematic cross-sectional view illustrating the structure for the pass-through section in the fire protection compartment of Example 4.

In Example 2, the heat insulating material 4 is winded by the thermally expandable fire-resistant sheet 50. On the other hand, in Example 4, the size of the pass-through hole 2 formed in the cavity wall 1 is larger than that of Example 1. Therefore, Example 4 is similar to Example 2, provided that a seal member 6 as a noncombustible caulking is filled between the thermally expandable fire-resistant sheet 50 used in Example 2 and the pass-through hole 2.

The fire resistance test compliant with ISO 834 was carried out with the structure for the pass-through section in the fire protection compartment of Example 4. The result was similar to that of Example 2.

### Comparative Example 1

The fire resistance test compliant with ISO 834 was carried out with the structure for the pass-through section in the fire protection compartment of Example 1 without containing aluminum foil 10 of the thermally expandable fire-resistant sheet 5. FIG. 9 is a schematic cross-sectional view illustrating expansion residues observed from non-heated side of the cavity wall in the fire resistance test of Comparative Example 1. When observed it from the un-heated side of the cavity wall 1, it was found that the expansion residues on the upper side of the pipe or the like 3 glows. When examined the structure for the pass-through section in the fire protection compartment of Comparative Example 1 after completion of the test, it was found that the expansion residues on the upper side of the pipe or the like 3 was very fragile and had a low density.

### Comparative Example 2

The fire resistance test compliant with ISO 834 was carried out with the structure for the pass-through section in the fire protection compartment of Example 1, provided that three layered the thermally expandable fire-resistant sheet of a non-woven fabric, an epoxy resin containing the thermally expandable resin composition 11 (available under trade name Fi-BlockTM from Sekisui Chemical Co Ltd.), and a non-woven fabric was used instead of the thermally expandable fire-resistant sheet 5.

As a result, it was found that the expansion residues on the upper side of the pipe or the like 3 glows as similar to Comparative Example 2 (See FIG. 9). When examined the structure for the pass-through section in the fire protection compartment of Comparative Example 2 after completion of the test, it was found that the expansion residues on the upper side of the pipe or the like 3 was very fragile and had a low density.

### INDUSTRIAL APPLICABILITY

The present invention can widely apply to a structure for architecture, marine vessels or the like as a structure for a pass-through section in a fire protection compartment for providing in a partition section of the structure.

### DESCRIPTION OF THE REFERENCE NUMERALS

- 1:: cavity wall
- 2:: pass-through hole
- 3:: pipe or the like
- 4:: heat insulating material
- 5, 50, 150:: the thermally expandable fire-resistant sheet
- 6:: seal member
- 10:: aluminum foil
- 11:: epoxy resin containing the thermally expandable resin composition
- 12:: aluminum foil laminated glass cloth
- 20:: expansion residues
- 100:: compartment
- 110:: sleeve
- 120:: noncombustible fixing material
- 130:: pipe or the like
- 140:: seal member
- A:: heated side where the fire resistance test carried out
- B:: un-heated side of fire resistance test

## Claims

1. A structure for a pass-through section in a fire protection compartment, comprising:
a partition section with a compartment pass-through hole provided in said partition section;
a pipe or the like (3) inserted into the compartment pass-through hole provided in the partition section of the structure;
a heat insulating material (4) disposed around the pipe or the like (3); and
a thermally expandable fire-resistant sheet (5, 50) installed between the pass-through hole and the heat insulating material (4);
wherein the gap between the pass-through hole and the pipe or the like (3) is sealed with the heat insulating material (4), the thermally expandable fire-resistant sheet (5, 50), and, optionally, a seal member (6),
**characterized in that** the thermally expandable fire-resistant sheet (5, 50) consists of the following layers in the following order from the side of the heat insulating material (4):
a metal foil layer (10), one or more thermally expandable resin layers (11), and an inorganic fiber layer (12) preferably laminated with a metal foil.

2. The structure for the pass-through section in the fire protection compartment according to claim 1, wherein the thermally expandable fire-resistant sheet (5, 50) comprises at least the metal foil layer (10), an epoxy resin containing the thermally expandable resin layer (10), an inorganic fiber layer (12) laminated with metal foil, wherein the thickness of the metal foil layer (10) is from 7 to 30 µm.

3. The structure for the pass-through section in the fire protection compartment according to claim 2, wherein the seal member (6) is located on the circumference of the heat insulating material (4) and the end face of the thermally expandable fire-resistant sheet (5, 50), wherein the seal member (6) is located so as to cover the pass-through hole.

4. A method for controlling an expansion of a thermally expandable fire-resistant sheet (5, 50) in a structure according to any one of claims 1 to 3, wherein the thermally expandable fire-resistant sheet consists of the metal foil layer (10), one or more thermally expandable resin layers (11), and an inorganic fiber layer (12) preferably laminated with a metal foil, wherein the thermally expandable fire-resistant sheet (5, 50) expands from the heated side of the compartment to the other side of the compartment so that the metal foil layer (10) is wrapped in when the heat insulating material (4) in one compartment of the structure for the pass-through section in the fire protection compartment is burned down or molten, and the thermally expandable fire-resistant sheet (5, 50) is heated above the temperature at which the sheet (5, 50) begins to expand.

## Patentansprüche

1. Struktur für eine Durchgangssektion in einem Brandschutzabschnitt, umfassend:
eine Teilungssektion mit einem Abschnittsdurchgangsloch, das in der Teilungssektion bereitgestellt ist;
ein Rohr (3) oder dgl., welches in das Abschnittsdurchgangsloch eingesetzt ist, das in der Teilungssektion der Struktur bereitgestellt ist;
ein Wärmeisoliermaterial (4), das um das Rohr (3) oder dgl. angeordnet ist; und
eine thermisch expandierbare feuerbeständige Lage (5, 50), die zwischen dem Durchgangsloch und dem Wärmeisoliermaterial (4) installiert ist;
wobei der Spalt zwischen dem Durchgangsloch und dem Rohr (3) oder dgl. mit dem Wärmeisoliermaterial (4), der thermisch expandierbaren feuerbeständigen Lage (5, 50) und gegebenenfalls einem Dichtungselement (6) abgedichtet ist;
**dadurch gekennzeichnet, dass** die thermisch expandierbare feuerbeständige Lage (5, 50) aus den folgenden Schichten in der folgenden Reihenfolge von der Seite des Wärmeisoliermaterials (4) besteht:
einer Metallfolienschicht (10), einer oder mehreren thermisch expandierbaren Harzschichten (11) und einer anorganischen Faserschicht (12), die vorzugsweise mit einer Metallfolie laminiert ist.

2. Struktur für die Durchgangssektion in dem Brandschutzabschnitt nach Anspruch 1, wobei die thermisch expandierbare feuerbeständige Lage (5, 50) mindestens die Metallfolienschicht (10), ein Epoxyharz, das die thermisch expandierbare Harzschicht (11) enthält, eine anorganische Faserschicht (12), die mit einer Metallfolie laminiert ist, wobei die Dicke der Metallfolienschicht (10) von 7 bis 30 µm beträgt.

3. Struktur für die Durchgangssektion in dem Brandschutzabschnitt nach Anspruch 2, wobei das Dichtungselement (6) am Umfang des Wärmeisolierungsmaterials (4) und der Endfläche der thermisch expandierbaren feuerbeständigen Lage (5, 50) angeordnet ist, wobei das Dichtungselement (6) derart angeordnet ist, dass es das Durchgangsloch abdeckt.

4. Verfahren zur Steuerung einer Expansion einer thermisch expandierbaren feuerbeständigen Lage (5, 50) in einer Struktur nach einem der Ansprüche 1 bis 3, wobei die thermisch expandierbare feuerbeständige Lage aus der Metallfolienschicht (10), einer oder mehreren thermisch expandierbaren Harzschichten (11) und einer anorganischen Faserschicht (12), die vorzugsweise mit einer Metallfolie laminiert ist, besteht, wobei die thermisch expandierbare feuerbeständige Lage (5, 50) von der erwärmten Seite des Abschnitts zur anderen Seite des Abschnitts expandiert, so dass die Metallfolienschicht (10) eingehüllt wird, wenn das Wärmeisolierungsmaterial (4) in einem Abschnitt der Struktur für die Durchgangssektion in dem Feuerschutzabschnitt verbrennt oder schmilzt, und die thermisch expandierbare feuerbeständige Lage (5, 50) über die Temperatur erhitzt wird, bei der die Lage (5, 50) beginnt zu expandieren.

## Revendications

1. Une structure pour une section de traversée dans un compartiment de protection contre le feu, comprenant:
une section de partition avec un trou de traversée de compartiment prévu dans ladite section de partition
un tuyau ou similaire (3) inséré dans un trou de traversée de compartiment prévu dans une section de partition de la structure;
un matériau d'isolation thermique (4) disposé autour du tuyau ou similaire (3); et
une feuille ignifuge thermiquement dilatable (5, 50) installée entre le trou de traversée et le matériau d'isolation thermique (4);
dans lequel l'espace entre le trou traversant et le tuyau ou similaire (3) est scellé avec le matériau d'isolation thermique (4), la feuille ignifuge thermiquement dilatable (5, 50), et, éventuellement, un élément d'étanchéité (6),
**caractérisé en ce que** la feuille ignifuge thermiquement dilatable (5, 50) consiste des couches suivantes dans l'ordre suivant à partir du côté du matériau d'isolation thermique (4) :
une couche de feuille métallique (10), une ou plusieurs couches de résine thermiquement dilatables (11), et une couche de fibre inorganique (12) de préférence stratifiée avec une feuille métallique.

2. La structure pour une section de traversée dans un compartiment de protection contre le feu selon la revendication 1, dans laquelle la feuille ignifuge thermiquement dilatable (5, 50) comprend au moins la couche de feuille métallique (10), une résine époxy contenant la couche de feuille métallique (10), une couche de fibre inorganique (12) stratifiée avec une feuille métallique, dans laquelle l'épaisseur de la couche de feuille métallique (10) est comprise entre 7 et 30 µm.

3. La structure pour une section de traversée dans un compartiment de protection contre le feu selon la revendication 2, dans laquelle l'élément d'étanchéité (6) est situé sur la circonférence du matériau d'isolation thermique (4) et sur la face d'extrémité de la feuille ignifuge thermiquement dilatable (5, 50), dans laquelle l'élément d'étanchéité (6) est situé de manière à couvrir le trou traversant.

4. Un procédé de contrôle de la dilatation d'une feuille ignifuge thermiquement dilatable (5, 50) dans un structure selon l'une quelconque des revendications 1 à 3, dans lequel la feuille ignifuge thermiquement dilatable consiste de la couche de feuille métallique (10), d'une ou de plusieurs couches de résine thermiquement dilatables (11), et d'une couche de fibre inorganique (12) de préférence stratifiée avec une feuille métallique, dans lequel la feuille ignifuge thermiquement dilatable (5, 50) se dilate à partir du côté chauffé du compartiment vers l'autre côté du compartiment de sorte que la couche de feuille métallique (10) est enveloppée lorsque le matériau d'isolation thermique dans un compartiment pour la section de traversée dans un compartiment de protection contre le feu est brûlé ou fondu, et la feuille ignifuge thermiquement dilatable (5, 50) est chauffée au-dessus de la température à laquelle la feuille (5, 50) commence à se dilater.
